Europäisches Patentamt

European Patent Office

Office européen des brevets

(19)

(11) Publication number: **0 097 444**
**A2**

(12) # EUROPEAN PATENT APPLICATION

(21) Application number: **83303226.1**

(22) Date of filing: **03.06.83**

(51) Int. Cl.³: **G 05 B 19/04**

(30) Priority: **05.06.82 JP 96488/82**

(43) Date of publication of application:
**04.01.84 Bulletin 84/1**

(84) Designated Contracting States:
**DE FR GB**

(71) Applicant: **FANUC LTD**
**5-1, Asahigaoka 3-chome Hino-shi**
**Tokyo 191(JP)**

(72) Inventor: **Nozawa, Ryoichiro**
**12-1-2105, Sarugaku-cho**
**Shibuya-ku Tokyo(JP)**

(72) Inventor: **Nagamine, Tsuyoshi**
**7-11-9, Owada-cho**
**Hachioji-shi Tokyo(JP)**

(72) Inventor: **Inoue, Tsuyoshi**
**Toyoda-Cohporasu 313 3-15-1, Higashi Toyoda**
**Hino-shi Tokyo(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) Ladder diagram display method.

(57) A method of displaying a ladder diagram in a numerical control system for displaying a sequence program on a display device in the form of a ladder diagram using at least relay contact symbols and relay symbols. The method includes steps of forming each item of data in the sequence program of an instruction code and operand, storing in memory correspondence between the operand and a condition corresponding to the operand belonging to each item of data, converting the sequence program into picture information for displaying a ladder diagram, obtaining a condition corresponding to an operand accompanying a write instruction from among the instruction codes, converting the name of the condition into picture information, and displaying the ladder diagram on a display device on the basis of the picture information, the ladder diagram display including the name of the condition.

./...

Fig. 8

# LADDER DIAGRAM DISPLAY METHOD

This invention relates to a method of displaying a ladder diagram. More specifically, the invention relates to a latter diagram display method in a numerical control system for executing sequence processing in response to commands from a numerical control unit on the basis of a sequence program stored previously in memory, the results of processing being delivered to a machine tool, and for displaying the sequence executed by the sequence program on a display device in the form of a ladder diagram using at least relay contact symbols and relay symbols.

Numerical control systems permit various mechanical elements in machine tools to be controlled on the basis of commands issued by a numerical control device which incorporates an operator's panel. In such numerical control systems a hardwired switch network or so-called "magnetics" unit comprising a multiplicity of relays is connected between the numerical control device, commonly referred to as an NC device, and the machine tool. Prescribed ones of these relays are actuated in response to the commands issued by the NC device, whereby the prescribed elements of the machine tool are caused to operate in the manner specified by the commands. These commands may be entered directly from the operator's panel, or may be generated in response to programmed M-function and S-function instructions. Disadvantages encountered in the conventional systems of the above type are the large size of the apparatus and the high cost entailed by the large number of relays, as well as poor reliability attributed to mechanical failure of the relays.

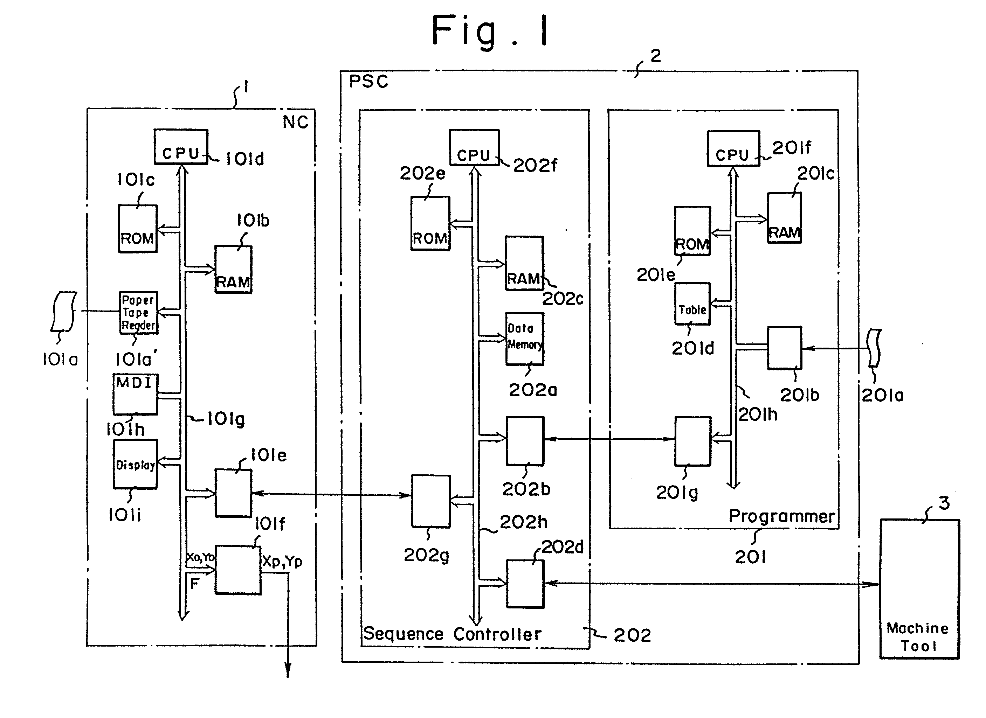

In view of the foregoing disadvantages, sequence controllers, also known as programmable sequence controllers, are now the most widely used means for performing, through program processing, the function of the magnetics unit. A programmable sequence controller (referred to hereinafter as a PSC device) according to the prior art is illustrated in Fig. 1. Numeral 1 denotes a numerical control device, 2 the conventional PSC installed separately of the numerical control device 1, and 3 a machine tool. The numerical control device includes a paper tape 101a bearing machining commands in punched form, a paper tape reader 101a' for reading the paper tape, a random access memory (RAM) 101b for storing the machining commands read in from the paper tape 101a, a read-only memory (ROM) 101c storing a control program for controlling the numerical control device 1, a central processing unit (CPU) 101d for executing processing in accordance with a machining command program or the control program, a transceiver unit 101e for the purpose of sending data to and receiving data from the sequence controller 2, and an arithmetic circuit 101f comprising a so-called pulse interpolating circuit which receives as inputs thereto signals indicative of amounts of movement $X_o$, $Y_o$ along the X and Y axes, respectively, and a signal indicative of feed speed F, for producing interpolated pulses $X_p$, $Y_p$ by performing a well-known arithmetic pulse interpolation operation based on these signal inputs. The numerical control device 1 also includes a manual data input unit (MDI unit)) 101h that is mounted on the operator's panel of the numerical control device 1 for entering single blocks of machining command data when, say, adding to or modifying such data. Also provided is a universal display unit 101i for displaying, e.g., NC program data, cutter offset, and the present position of a tool. Note that the display unit and MDI unit may be constructed as a single unit. The aforementioned units 101a' through 101f are interconnected by a bus line 101g.

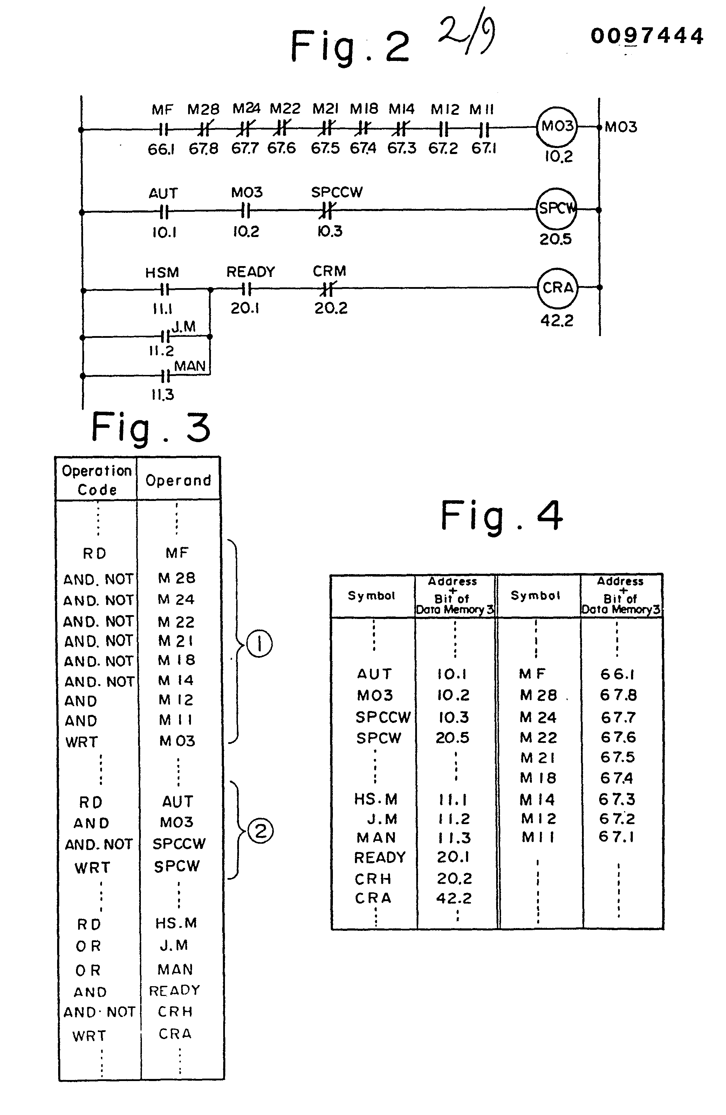

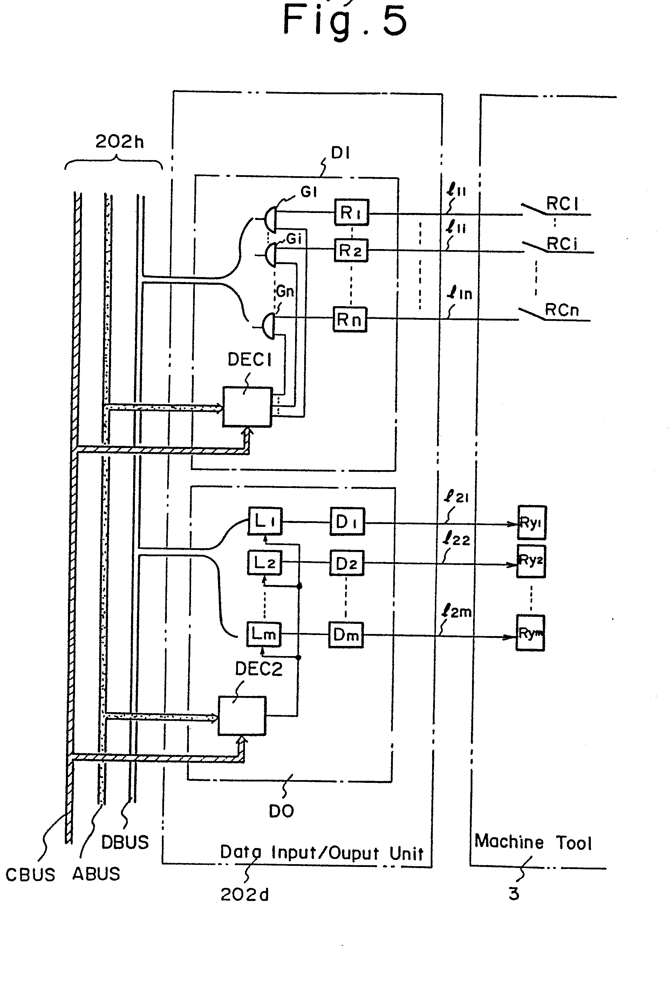

The PSC device 2 comprises a programmer 201 for converting an entered sequence program into machine language and for correcting the sequence program, and a sequence controller proper 202. The programmer 201 includes a paper tape 201a bearing a correspondence table (described below) and a sequence program in punched form, a paper tape reader 201b for reading the paper tape 201a, and a random access memory (RAM) 201c for storing the sequence program. A sequence program performs the function of a magnetics unit, expressing the function thereof in logical form using operation codes and operands which make up a program. By way of example, a ladder diagram constituting part of the magnetics unit shown in Fig. 2 may be programmed as depicted in Fig. 3. In Fig. 3, the operation codes in the sequence program are given by RD, AND, WRT, OR, AND·NOT and so on. RD is a read operation instruction, AND a logical product instruction, WRT a write operation instruction, OR a logical sum instruction, and AND·NOT an instruction for logical multiplication with a negated value. Further, MF, M28,..., AUT, M03... represent the operands of the sequence program in symbolic representation, the logical values whereof are stored at prescribed addresses and prescribed bits in a data memory 202a, described below, located within the sequence controller proper 202. The PSC device 2, based on the group of instructions (1) shown in Fig. 3, executes the following logical operation:

$$MF \cdot \overline{M28} \cdot \overline{M24} \cdot \overline{M22} \cdot \overline{M21} \cdot \overline{M18} \cdot \overline{M14} \cdot M12 \cdot M11$$

and plants the result of the operation (either logical "1" or logical"0") in the data memory 202a at the prescribed bit of the prescribed address corresponding to operand M03, which accompanies the write command WRT. The PSC device 2 also executes the following logical operation based on the group of instructions (2):

$$AUT \cdot M03 \cdot \overline{SPCCW}$$

and plants the result of the operation ("1" or "0") in the data memory 202a at the prescribed bit of the

-5-

prescribed address designated by the operand SPCW, which accompanies the write command WRT.

Returning to Fig. 1, the programmer 201 further includes a correspondence table 201d for storing the corresponding relationships between the symbols MF, AUT... constituting the operands of the sequence program, and storage locations of the data memory 202a. An example of what is stored in the correspondence table is illustrated in Fig. 4. It will be seen that the symbol AUT corresponds to the first bit of the tenth address of the data memory 10, that symbol M03 corresponds to the second bit of the tenth address, and likewise through symbol CRA, which corresponds to the second bit of the 42nd address. The ladder diagram of Fig. 2 also shows the symbols matched with the corresponding storage locations. The programmer 201 is also provided with a read-only memory (ROM) 201e for storing, e.g., a control program for controlling the overall programmer 201, as well as a language translator program for translating the sequence program read in from the paper tape 201a into machine language. The programmer 201 further comprises a central processing unit (CPU) 201f for executing, e.g., translation and correction of the sequence program in accordance with the program stored in the ROM 201e, and a transceiving unit 201g having a buffer or the like for sending data to and receiving data from the sequence controller proper 202. The foregoing units constituting the programmer 201 are interconnected by a bus line 201h.

The sequence controller proper 202 includes the data memory 202a mentioned above. The data memory 202a establishes correspondence between each relay contact of the magnetics unit shown in Fig. 2 and a single bit, the on/off (closed/open) condition of a relay contact being represented by logical "1" or logical "0", respectively, in the corresponding bit. For example, assume that the operator places the system in the automatic mode using the operator's panel. With a magnetics unit, the relay contact AUT in the power sequence circuit would be placed in the ON condition. With the PSC device, however, logical "1" is stored in the first bit of the tenth address in data memory 202a.

The sequence controller proper 202 also includes a transceiving unit 202b having a buffer or the like for supervising the transmission and reception of data with the programmer 201, a RAM 202c for storing the sequence program translated into machine language by the programmer 201, a data input/output unit 202d for supervising the transmission and reception of data with the machine tool 3, a ROM 202e for storing the control program which controls the overall sequence controller proper 202, a central processing unit 202f for executing prescribed sequence processing in accordance with the control program and sequence program, and a transceiving unit 202g for sending data to and receiving data from the numerical control device 1. The units constituting the sequence controller proper 202 are interconnected by a bus line 202h.

Fig. 5 is a block diagram showing the data input/output unit 202d in greater detail. The data input/output unit 202d comprises a data input circuit DI and a data output circuit DO. The data input circuit DI includes receivers $R_1$ through $R_n$ which receive signals from various limit switches and relay contacts $RC_1$ through $RC_n$ delivered from the machine side on cables $l_{11}$ through $l_{1n}$, AND gates $G_1$ through $G_n$ receiving the outputs of the respective receivers $R_1$ through $R_n$, and a decoder $DEC_1$ which decodes address signals received from an address bus ABUS to open predetermined ones of the AND gates, the AND gate output being sent out on the data bus DBUS. The data output circuit DO includes flip-flops (or latch circuits if desired) $L_1$ through $L_m$ for storing such signals as forward and reverse spindle rotation signals to be delivered to the machine tool 3, drivers $D_1$ through $D_m$ provided for corresponding ones of the flip-flops (flip-flop will be abbreviated to FF hereinafter) $L_1$ through $L_m$ for delivering the output signals from the FFs to the machine tool 3 via cables $l_{21}$ through $l_{2m}$ to actuate relays $Ry_1$ through $Ry_m$, and a decoder $DEC_2$ which decodes address signals received from the address bus ABUS to place predetermined ones of the FFs in a settable or resettable state, and which stores in predetermined FFs the data received from the data bus DBUS. In addition to the buses ABUS and DBUS, a control signal bus CBUS is provided for sending and receiving control signals. The abovementioned cables $l_{11}$ through $l_{1n}$ and $l_{21}$ through $l_{2m}$ interconnect the data input/output unit 202d and the machine tool so that data may be sent and received between them.

The PSC device 2 operates in the following manner. First, a table showing the correspondence between symbols and storage locations is prepared while referring to the ladder diagram (Fig. 2) of the magnetics circuit, and the table is punched in a paper tape. A sequence program also is prepared in the above-described manner using operation codes and symbols (operands) and is similarly punched into the paper tape 201a. Next, the punched tape 201a is read by the paper tape reader 201b to store the correspondence table in table 201d and the sequence program in the RAM 201c. When the foregoing has been accomplished the PSC device 2 starts executing the language processing program stored in the ROM 201e, reads the instructions in the sequence program out of the RAM 201c in successive fashion and converts the operation codes and operands into machine language. The PSC device uses the correspondence table, which is stored in the table 201d, to convert each operand into the machine word representing the prescribed address and bit of the data memory 202a. The sequence program converted into these machine words is transferred to and stored in the RAM 202c through the transceiver unit 201g of the programmer 201 and the transceiver unit 202b of the sequence controller 202. The sequence controller 202 now is capable of executing sequence processing. Henceforth, in accordance with the control program, the CPU 202f reads the sequence program instructions successively out of the RAM 202c one instruction at a time, executes sequence processing from the first to the last instructions of the sequence program and then returns to the first instruction to repeat the cycle. Thus the PSC 2 steps through the sequence program cyclically in repetitive fashion and at high speed.

Now assume that a command such as the command M03 for forward spindle rotation is issued by the numerical control device 101. When this takes place, with reference being had to Fig. 4, logical "1" is written into the data memory 202a in the first bit of the 66th address where the M-function is to be stored, in the first bit of the 67th address where the M-code signal M11 is to be stored, and in the second bit of the 67th address where the M-code signal M12 is to be stored.

Since the central processing unit 202f is executing sequence processing by repeatedly stepping through the sequence program cyclically and reading out the instructions thereof at high speed in consecutive fashion, logical "1" will be stored in the fifth bit of the 20th address of data memory 202a when the groups of instructions (1), (2) in the sequence program (Fig. 3) have been executed. Thereafter, in response to a separate sequence program instruction, the status (SPCW = "1") of the fifth bit at the 20th address is delivered to and stored in, say, flip-flop $L_1$ of the data output circuit DO (Fig. 5), and is delivered to the machine tool 3 through the driver $D_1$ and cable $l_{21}$. This item of data places the relay $R_1$ of the machine tool 3 in the ON condition so that the spindle of the machine tool is rotated in the forward direction. Now assume that, say, the relay contact RC1 on the machine tool side closes (i.e., assumes the ON condition) during forward rotation of the spindle, thereby indicating completion of the rotation operation. As a result, a forward rotation end signal (logical "1") from the machine tool side, which signal is produced by closure of the relay contact $RC_1$, is stored in a prescribed bit of the data memory 202a (Fig. 1) through the cable $l_{11}$, receiver $R_1$, AND gate $G_1$ and data bus DBUS. Sequence programming then continues and the numerical control device 1 is informed of completion of the forward rotation operation. This ends the sequence step for forward rotation of the spindle.

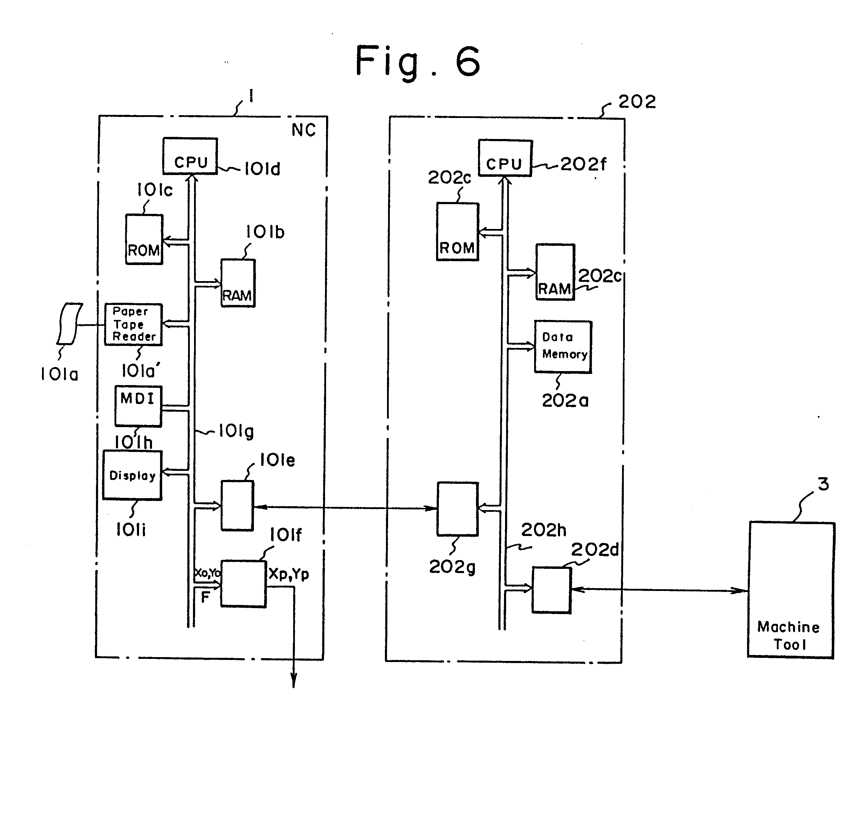

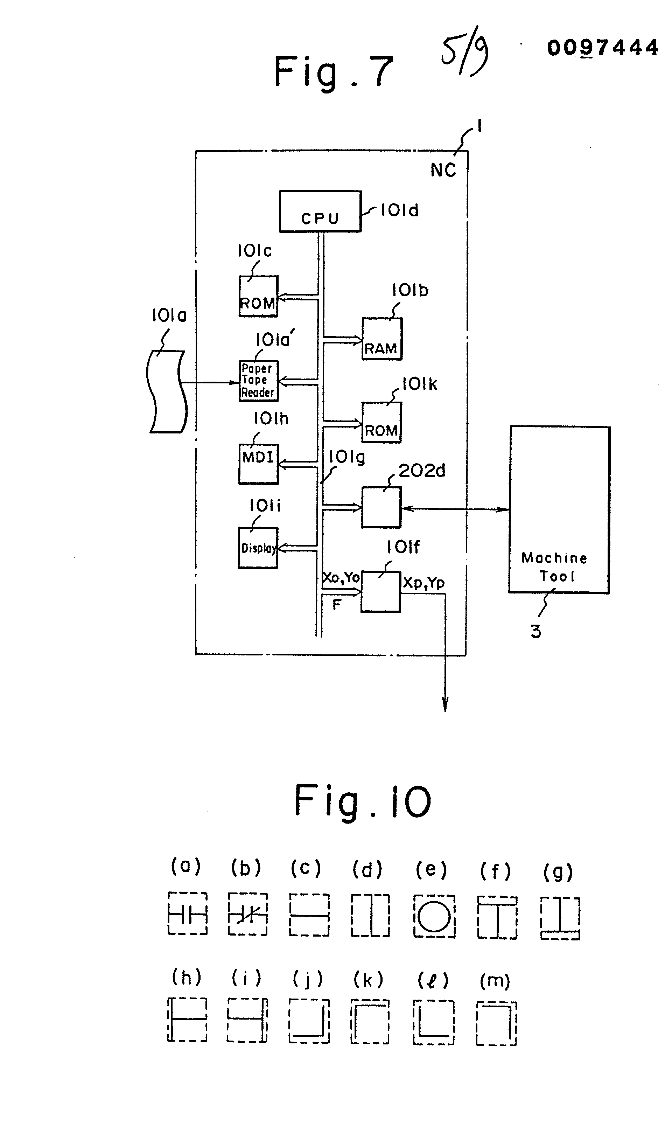

In the case described above the PSC device 2 is provided with the programmer 201. An arrangement as shown in Fig. 6 is possible, however, in which the programmer 201 and transceiver unit 202b are deleted, a sequence program already converted into machine language is read in from the numerical control device 1 by reading means (such as the paper tape reader 101a') and is stored in the RAM 202c through the transceiver units 101e and 202g. In place of the RAM 202c, moreover, it is possible to use a ROM for storing a sequence program comprising machine language. Furthermore, while the numerical control device 1 and PSC device 2 are shown to be provided separately in Figs. 1 and 6, these can be integrated into a single unit and made to share the same processor, as illustrated in Fig. 7. In Fig. 7, portions similar to those shown in Fig. 1 are designated by like reference characters. Numeral 101k denotes the abovementioned ROM for storing the sequence program expressed in machine language.

The numerical control system having the construction shown in Figs. 1, 6 and 7 is capable of displaying a ladder diagram on the universal display unit 101i in order to facilitate sequence program debugging and maintenance processing.

With the conventional method of displaying a ladder diagram, however, the ladder diagram is displayed only in the very simple form shown in Fig. 2. In other words, it is not possible to tell from the display what functions are being indicated by the various control relays, such as the control relays marked by the symbols M03, SPCW, etc. Hence, a sequence cannot be readily comprehended merely by observing the ladder diagram. Furthermore, whenever it is not known what condition is being indicated by a control relay, one must refer to a correspondence table, attached to the apparatus, giving the correspondence between control relays and the names of their conditions. Acquiring an understanding of a sequence is therefore a time consuming task, and both maintenance and debugging are complicated operations.

Another disadvantage with the conventional ladder diagram display method is that the on/off conditions of each control relay are not displayed. This makes it difficult to perform maintenance and debugging should the sequence controller malfunction.

## SUMMARY OF THE INVENTION

Accordingly, an object of the present invention is to provide a ladder diagram display method through which a sequence operation can be readily comprehended, and which permits debugging and maintenance to be performed in a simple manner.

Another object of the present invention is to provide a ladder diagram display method through which the conditions indicated by control relays can be displayed together with a ladder diagram.

A further object of the present invention is to provide a ladder diagram display method through which the on/off conditions of control relays can be displayed together with a ladder diagram.

Other features and advantages of the present invention will be apparent from the following description taken in conjunction with the accompanying drawings, in which like reference characters designate the same or similar parts throughout the figures thereof.

BRIEF DESCRIPTION OF THE DRAWINGS

Fig. 1 is a block diagram of an example of a programmable sequence controller according to the prior art;

Fig. 2 shows a ladder diagram of the type associated with magnetics circuitry;

Fig. 3 illustrates an example of a sequence program;

Fig. 4 is an explanatory view showing the corresponding relationship between symbols and storage locations in a memory;

Fig. 5 is a block diagram of a data input/output unit included in the programmable sequence controller shown in Fig. 1;

Figs. 6 and 7 are block diagrams illustrating examples of numerical control systems which include a programmable sequence control function;

Fig. 8 is a block diagram of a numerical control system for practicing a ladder diagram display method according to an embodiment of the present invention;

Fig. 9 is a chart useful in describing correspondence between symbols and names of conditions;

Fig. 10 is an explanatory view of symbolic patterns stored in a character generator included in the system of Fig. 8;

Fig. 11 is an explanatory view showing an example of a display presented on the screen of a CRT included in the sustem of Fig. 8; and

Fig. 12 is a flowchart of ladder diagram display processing according to the present invention.

DESCRIPTION OF THE PREFERRED EMBODIMENT

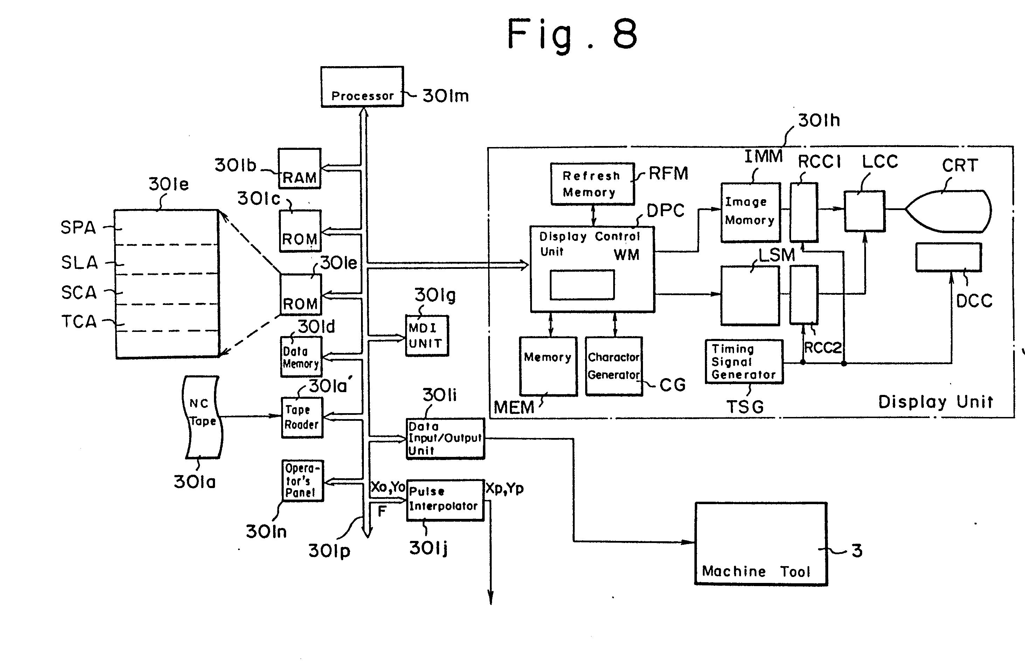

Reference will now be had to Fig. 8 showing a block diagram of a numerical control system for practicing a method of displaying a ladder diagram according to the present invention. The system includes a numerical control tape 301a bearing machining commands in punched form, a tape reader 301a' for reading in the NC data from the tape 301a, a RAM 301b for storing the NC data read in by the tape reader 301a', a ROM 301c for storing a control program, a data memory 301d comprising a RAM for storing the results of both numerical control processing and sequence processing, and a ROM 301e for storing a sequence program expressed in machine language. The ROM 301e, in addition to a sequence program storage area SPA, is provided with storage areas SLA, SCA, TCA in which various items of information have been stored for displaying comments. More specifically, the storage areas SLA, SCA, TCA store the following data, respectively:

(a)   data giving the correspondence between the symbols of various relays shown on a ladder diagram and locations (address and bit position) of the data memory 301d storing the logical state ("1" or "0") of the relays (such correspondence is shown in Fig. 4);

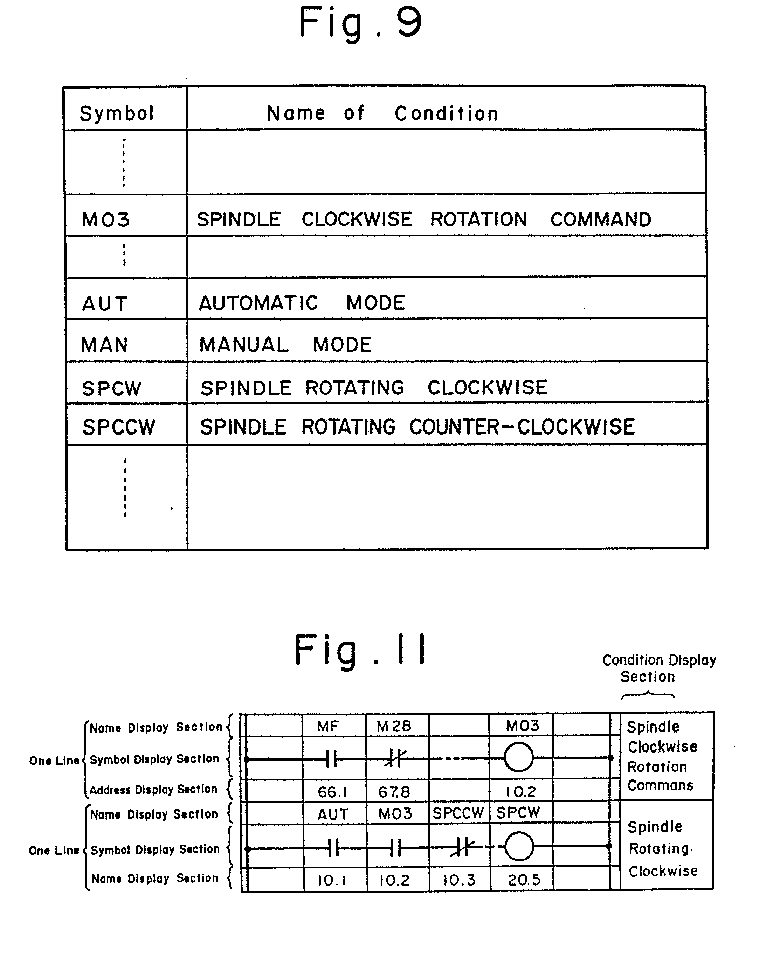

(b)   data giving the correspondence between the symbols of Fig. 9 and the names of conditions indicated by these symbols, namely data giving the correspondence between M03 and "SPINDLE CLOCKWISE ROTATION COMMAND", SPCW and "SPINDLE ROTATING CLOCKWISE", etc.; and

(c)   time chart data for turning on prescribed relays.

Also included in the system of Fig. 8 are a manual data input unit (MDI) 301g, a display unit 301h, and a data input/output unit 301i for supervising the input and output of data with the machine tool 3.  It should be noted that the data input/output unit 301i is structurally similar to the data input/output unit 202d shown in Fig. 5.  Further provided is a pulse interpolator 301j which receives as inputs thereto signals indicative of amounts of movement $X_o$, $Y_o$ along the X and Y axes, respectively, and a signal indicative of feed speed F, for producing interpolation pulses $X_p$, $Y_p$ by performing a well-known arithmetic pulse interpolation operation based on these signal inputs. All of the foregoing units are under the control of a data processing unit 301m.  Numeral 301n denotes an operator's panel.  All units are interconnected by a

0097444

-16-

bus line 301n.

The display unit 301h comprises a display controller DPC, constituted by a computer, for executing processing which includes processing to convert a sequence program, transferred from the ROM 301e, into picture information, a refresh memory RFM connected to the display controller DPC for storing the picture information obtained by the convetion processing performed by the display controller DPC, and a memory MEM for storing (a) the data giving the correspondence between the abovementioned symbols and the storage locations of the data memory 301d, (b) the data giving the correspondence between the symbols and the names of conditions indicated by these symbols, and (c) data giving the correspondence between the symbols and the on/off states (expressed by logical values "1", "0") of the control relays corresponding to these symbols. These data are transferred to the memory MEM from the ROM 301e. Also provided are a a character generator CG for storing various alphanumeric characters and symbolic patterns illustrative of a ladder diagram, an image memory IMM for successively storing items of picture data generated by the character generator CG based on the picture information stored in the refresh memory RFM, whereby all picture information for displaying a single picture is stored, a luminance signal memory LSM for storing a luminance signal generated by the display control unit DPC, a timing signal generator TSG, read control units $RCC_1$, $RCC_2$, a luminance control unit LCC, a beam deflection control unit DCC, and a cathode-ray tube CRT.

The character generator CG stores not only alphanumeric patterns but also symbolic graphics for displaying ladder diagrams. Examples of these symbolic graphics are as shown in Fig. 10, in which (a) is a symbol indicating a normally open relay contact and (b) a symbol indicating a normally closed relay contact. Fig. 10(e) depicts a relay. The remaining symbolic graphics illustrate various connections. The display control unit DPC generates the aforementioned luminance signal so as to make a relay contact symbol or relay symbol corresponding to a logical "1" operand, brighter than that of relay contact symbol or relay symbol corresponding to a logical "0" operand. As mentioned above, the luminance signal is stored in the luminance signal memory LSM. The timing signal generator TSG generates a timing signal for reading stored information out of the image memory IMM and luminance signal memory LSM, and a timing signal for deflecting the electron beam of the CRT. The read control units $RCC_1$, $RCC_2$ responds to the timing signal from the timing signal generator TSG by reading stored information out of the image memory IMM and luminance signal memory LSM, respectively, and delivering the information to the luminance control unit LCC. The latter controls the luminance of the CRT based on the information received, diminishing the brightness of relay symbols corresponding to logical "0" operands, and intensifying the brightness of relay symbols corresponding to logical "1" operands. The beam deflection control unit DCC deflects the CRT electron beam horizontally and vertically in sync with the timing signal received from the timing signal generator TSG.

Assume that a picture has been stored in the image memory IMM, and that a luminance signal has been stored in the luminance signal memory LSM. The arrangement is such that the stored information will be read out of the image memory IMM and luminance signal memory LSM in sync with the deflection of the CRT beam (this operation being referred to as raster scanning), so that the luminance of the CRT will be controlled by the luminance control unit LCC based on the read information. When this is carried out, the CRT displays a ladder diagram the luminance of which is controlled in accordance with the on/off conditions ("1", "0" logic of the operands) of the relays.

Fig. 11 is a partially enlarged view of a ladder diagram as displayed by the CRT in accordance with the present invention. "MF", "M28", "M03", "AUT", "SPCCW", and "SPCW" are control relay symbols. "SPINDLE CLOCKWISE ROTATION COMMAND" and "SPINDLE ROTATING CLOCKWISE" are the names of the conditions of the symbols M03, SPCW, respectively. The fine lines in Fig. 11 are not displayed on the display unit. In other words, the only lines that appear are those that interconnect the relays and relay contacts. A one-line portion of the display comprises a name display section, a symbol display section and an address display section. A condition display section is provided at the end of each line.

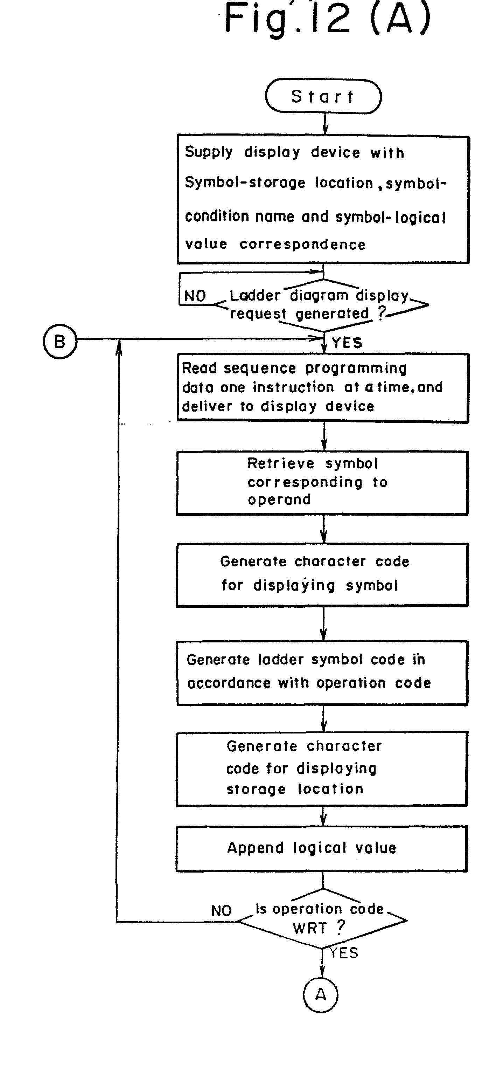

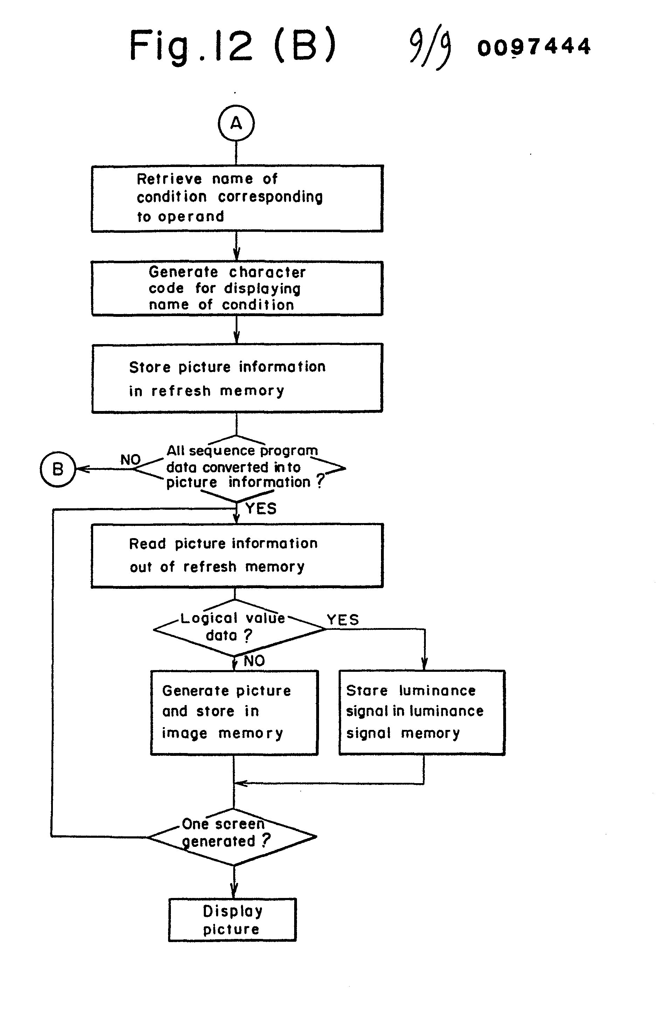

Next, reference will be had to the flowchart of Fig. 12 to describe processing executed for displaying the ladder diagram shown in Fig. 11.

(a) When power is introduced to the system, the data processing unit 301m goes to the ROM 301e to read out the data giving the correspondence between symbols and storage locations and between the symbols and names of conditions, and goes to the data memory 301d to read out the data giving the correspondence between symbols and the on/off conditions of the control relays corresponding to these symbols. These data are transferred to the display device 301h, where the display control unit DPC stores the data in the memory MEM.

(b) Now assume that a ladder diagram display signal is generated by the operator's panel 301n. The data processing unit 301m will respond by delivering sequence program data from the ROM 301e to the display device 301h in successive fashion. The unit of sequence program data delivered at one time comprises, say, the operation codes RD through WRT, as illustrated in Fig. 3.

(c)   Upon receiving the sequence program data from the ROM 301d, the display control unit DPC converts the data into picture information.   Specifically, since each item of sequence program data is composed of an operation code and operand, the display control unit DPC, upon receiving an item of such data, goes to the memory MEM and reads out the symbol corresponding to the operand, generates a character code for displaying the symbol, and stores the code in a working memory WM within the display control unit DPC.

(d)   Next, the display control unit DPC generates a symbolic code, in conformance with the operation code, for displaying a relay contact symbol, relay symbol and connection symbol, and likewise stores the code in the working memory WM.

(e)   Thereafter, the display control unit DPC converts the operand (a binary number) into a decimal number, computes the storage location of the decimal number, generates a character code for displaying the storage location, and stores the character code in the working memory WM.

As a result of the foregoing processing, picture information for each display section of a one-line portion of the CRT screen, namely picture information for the name display section, symbol display section and address display section shown in Fig. 11, is obtained from one item of sequence program data and is stored in the working memory WM.

(f) Next, a logical value indicating the on or off state of the control relay corresponding to the operand is read out of the memory MEM and is appended to the picture information.

(g) When the foregoing processing for converting one item of sequence program data into picture information is completed, a decision is rendered as to whether the operation code making up said item of data is a read instruction.

(h) If the decision is "NO", processing returns to step (b), the next item of sequence program data is read, and steps (c) through (g) are repeated.

(i) If the decision in step (g) is "YES", on the other hand, indicating that the operation code is a read instruction, then the name of the condition corresponding to the operand is read out of the memory MEM, a character code is generated for displaying the name of the condition in the condition display section at the rightmost side of the line, and the code is stored in the working memory WM.

(j) Next, the picture information for one line, which is stored in the working memory WM, is transferred to the refresh memory RFM, and the contents of the working memory are cleared.

(k) The next step calls for a decision as to whether all of the sequence program data have been converted into picture information. When the decision is "NO", the system returns to step (b) and the foregoing processing is repeated until all of the sequence program data have been converted into picture information, thereby ending the conversion processing.

(1)  When the ladder diagram picture information has been stored in the refresh memory RFM by the foregoing processing, the display control unit DPC reads the picture information out of the refresh memory RFM sequentially.

(m)  The display control unit DPC goes to the character generator CG to read out character patterns and symbolic patterns corresponding to the picture information read out of the refresh memory RFM, stores these patterns in the image memory IMM, and stores a luminance signal, contained in the picture information, in the luminance signal memory LSM.  As a result of the foregoing, a ladder diagram picture and the luminance signal are stored in the image meory IMM and luminance signal memory LSM, respectively.

(n)  Thereafter, by means of raster scanning, the stored information is read out of the image memory IMM and luminance signal memory LSM and the luminance of the CRT is controlled accordingly.  When this is carried out, the CRT will present a display of the ladder diagram shown in Fig. 11, and the brightness of the relay symbols in the ladder diagram will indicate the relay condition.  A relay will appear brighter when it is turned on than when it is turned off.

In the foregoing, the on or off state of a relay is distinguished by the brightness of the relay symbol. The same can be accomplished by altering the color of the relay symbol to indicate its condition.

In accordance with the present invention as described and illustrated hereinabove, symbols, the names of conditions corresponding to the symbols, and the on/off states of control relays are displayed together with a ladder diagram. This makes it easier to understand a sequence and simplifies both maintenance and debugging.

As many apparently widely different embodiments of the present invention can be made without departing from the spirit and scope thereof, it is to be understood that the invention is not limited to the specific embodiments thereof except as defined in the appended claims.

CLAIMS:

1. A method of displaying a ladder diagram in a numerical control system for executing sequence processing in response to commands from a numerical control unit on the basis of a sequence program data stored previously in memory, the results of processing being delivered to a machine tool, and for displaying the sequence executed by the sequence program on a display device in the form of a ladder diagram using at least relay contact symbols and relay symbols, comprising the steps of:

(a) forming each item of data in the sequence program of an operation code and operand;

(b) storing in memory correspondence between the operand and a condition corresponding to said operand belonging to each item of data;

(c) converting the sequence program into picture information for displaying a ladder diagram;

(d) obtaining a condition corresponding to an operand accompanying a write instruction from among the instruction codes, and converting the name of said condition into picture information; and

(e) displaying the ladder diagram on display means on the basis of said picture information, the ladder diagram display including the name of the condition.

2. The method of claim 1, further comprising steps of:

(f) displaying, in the form of a logical value, whether said condition is satisfied or not, and storing in memory the correspondence between the operand corresponding to said state and the logical value, and

(g) making a display of a relay contact symbol and relay symbol corresponding to an operand which satisfies the condition, appear different from a display of a relay contact symbol and relay symbol corresponding to an operand which does not satisfy the condition.

3. The method according to claim 2, wherein a display of a relay contact symbol and relay symbol is made to appear different by altering the color of the display.

4. The method according to claim 2, wherein a display of a relay contact symbol and relay symbol is made to appear different by altering the brightness of the display.

5. The method according to claim 1, wherein an operand is expressed by a symbol, correspondence between symbols and operands is stored in memory in advance, and said step (c) includes obtaining symbols corresponding to operands contained in the sequence program data, inserting in said picture data character codes for displaying said symbols, and displaying said symbols adjacent relay contact symbols and relay symbols.

# Fig. 1

0097444

Fig. 2  2/9  0097444

## Fig. 2

Ladder diagram:

Rung 1: MF (66.1) ⊣⊢ — M28 (67.8) ⊣/⊢ — M24 (67.7) ⊣/⊢ — M22 (67.6) ⊣/⊢ — M21 (67.5) ⊣/⊢ — M18 (67.4) ⊣/⊢ — M14 (67.3) ⊣/⊢ — M12 (67.2) ⊣⊢ — M11 (67.1) ⊣⊢ — (MO3 10.2) — MO3

Rung 2: AUT (10.1) ⊣⊢ — MO3 (10.2) ⊣⊢ — SPCCW (10.3) ⊣/⊢ — (SPCW 20.5)

Rung 3: HSM (11.1) ⊣⊢ — READY (20.1) ⊣⊢ — CRM (20.2) ⊣/⊢ — (CRA 42.2); branch: J.M (11.2) ⊣⊢; branch: MAN (11.3) ⊣⊢

## Fig. 3

| Operation Code | Operand | |
|---|---|---|
| ⋮ | ⋮ | |
| RD | MF | |
| AND. NOT | M 28 | |
| AND. NOT | M 24 | |
| AND. NOT | M 22 | |
| AND. NOT | M 21 | ① |
| AND. NOT | M 18 | |
| AND. NOT | M 14 | |
| AND | M 12 | |
| AND | M 11 | |
| WRT | M 03 | |
| ⋮ | ⋮ | |
| RD | AUT | |
| AND | MO3 | ② |
| AND. NOT | SPCCW | |
| WRT | SPCW | |
| ⋮ | ⋮ | |
| RD | HS.M | |
| OR | J.M | |
| OR | MAN | |
| AND | READY | |
| AND · NOT | CRH | |
| WRT | CRA | |
| ⋮ | ⋮ | |

## Fig. 4

| Symbol | Address + Bit of Data Memory 3 | Symbol | Address + Bit of Data Memory 3 |
|---|---|---|---|
| ⋮ | ⋮ | ⋮ | ⋮ |
| AUT | 10.1 | M F | 6 6.1 |
| MO3 | 10.2 | M 28 | 6 7.8 |
| SPCCW | 10.3 | M 24 | 67.7 |
| SPCW | 20.5 | M 22 | 67.6 |
| ⋮ | ⋮ | M 21 | 67.5 |
| | | M 18 | 6 7.4 |
| HS.M | 11.1 | M 14 | 67.3 |
| J.M | 11.2 | M 12 | 6 7.2 |
| MAN | 11.3 | M 11 | 67.1 |
| READY | 20.1 | ⋮ | ⋮ |
| CRH | 20.2 | | |
| CRA | 42.2 | | |
| ⋮ | ⋮ | | |

# Fig. 5

202h

DI

GI

$R_1$    $\ell_{11}$    RCI

Gi

$R_2$    $\ell_{11}$    RCi

Gn

$R_n$    $\ell_{1n}$    RCn

DECI

$L_1$   $D_1$   $\ell_{21}$   Ry₁

$L_2$   $D_2$   $\ell_{22}$   Ry₂

$L_m$   $D_m$   $\ell_{2m}$   Rym

DEC2

DO

CBUS   ABUS   DBUS

Data Input/Ouput Unit

202d

Machine Tool

3

# Fig. 6

# Fig.7

# Fig.10

(a)  (b)  (c)  (d)  (e)  (f)  (g)

(h)  (i)  (j)  (k)  (ℓ)  (m)

# Fig. 8

Processor — 301m

301b — RAM
301c — ROM
301e — ROM
301d — Data Memory
301a' — Tape Reader
NC Tape
301a
Operator's Panel — 301n

301e

SPA
SLA
SCA
TCA

301g — MDI UNIT
301i — Data Input/Output Unit
301j — Pulse Interpolator

Xo,Yo   Xp,Yp
F

301p

**Display Unit** — 301h

Refresh Memory — RFM
IMM — Image Memory
RCC1
LCC
CRT
Display Control Unit — DPC
WM
LSM
DCC
Memory — MEM
Character Generator — CG
Timing Signal Generator — TSG
RCC2

Machine Tool — 3

# Fig. 9

| Symbol | Name of Condition |
|--------|-------------------|
| ⋮ | |
| MO3 | SPINDLE CLOCKWISE ROTATION COMMAND |
| ⋮ | |
| AUT | AUTOMATIC MODE |
| MAN | MANUAL MODE |
| SPCW | SPINDLE ROTATING CLOCKWISE |
| SPCCW | SPINDLE ROTATING COUNTER-CLOCKWISE |
| ⋮ | |

# Fig. 11

Condition Display Section

| | | | | | | |
|--|--|--|--|--|--|--|
| Name Display Section | MF | M28 | | MO3 | | Spindle Clockwise Rotation Commans |
| Symbol Display Section | ⊣⊢ | ⊣⊬ | --- | ◯ | | |
| Address Display Section | 66.1 | 67.8 | | 10.2 | | |
| Name Display Section | AUT | MO3 | SPCCW | SPCW | | Spindle Rotating Clockwise |
| Symbol Display Section | ⊣⊢ | ⊣⊢ | ⊣⊬ | ◯ | | |
| Name Display Section | 10.1 | 10.2 | 10.3 | 20.5 | | |

One Line, One Line

# Fig.12 (A)

```
                    ( Start )
                        │
                        ▼
        ┌───────────────────────────────┐
        │ Supply display device with     │
        │ Symbol-storage location, symbol-│
        │ condition name and symbol-logical│
        │ value correspondence            │
        └───────────────────────────────┘
                        │
                        ▼
      NO    ◇ Ladder diagram display  ◇
        ◄────  request generated ?
                        │ YES
   (B)                  ▼
    │       ┌───────────────────────────────┐
    │       │ Read sequence programming      │
    │       │ data one instruction at a time,│
    │       │ and deliver to display device  │
    │       └───────────────────────────────┘
    │                   │
    │                   ▼
    │       ┌───────────────────────────────┐
    │       │      Retrieve symbol           │
    │       │    corresponding to            │
    │       │       operand                  │
    │       └───────────────────────────────┘
    │                   │
    │                   ▼
    │       ┌───────────────────────────────┐
    │       │   Generate character code      │
    │       │    for displaying symbol       │
    │       └───────────────────────────────┘
    │                   │
    │                   ▼
    │       ┌───────────────────────────────┐
    │       │ Generate ladder symbol code in │
    │       │ accordance with operation code │
    │       └───────────────────────────────┘
    │                   │
    │                   ▼
    │       ┌───────────────────────────────┐
    │       │    Generate character          │
    │       │    code for displaying         │
    │       │     storage location           │
    │       └───────────────────────────────┘
    │                   │
    │                   ▼
    │       ┌───────────────────────────────┐
    │       │      Append logical value      │
    │       └───────────────────────────────┘
    │                   │
    │      NO           ▼
    └──────────◇ Is operation code ◇
                    WRT ?
                        │ YES
                        ▼
                       (A)
```

## Fig.12 (B)    9/9   0097444

(A)

```
Retrieve name of
condition corresponding
to operand
```

```
Generate character
code for displaying
name of condition
```

```
Store picture information
in refresh memory
```

NO ← All sequence program data converted into picture information ?

(B)

↓ YES

```
Read picture information
out of refresh memory
```

Logical value data ? — YES

↓ NO

```
Generate picture
and store in
image memory
```

```
Store luminance
signal in luminance
signal memory
```

One screen generated ?

```
Display
picture
```